# EUROPÄISCHE PATENTSCHRIFT

(11) **EP 1 522 784 B1**
(45) Veröffentlichungstag und Bekanntmachung des Hinweises auf die Patenterteilung: **14.02.2007**
(21) Anmeldenummer: 04023955.0
(22) Anmeldetag: 07.10.2004
(51) Int. Cl.: F16P 3/14, F16P 3/00

(54) **Vorrichtung mit Schutzeinrichtung**
Device with safety system
Dispositif muni d'un système de sécurité

(30) Priorität: 09.10.2003 DE 10346918
(43) Veröffentlichungstag der Anmeldung: 13.04.2005
(73) Patentinhaber: SICK AG, 79183 Waldkirch (DE)
(72) Erfinder: Braune, Ingolf, 79194 Gundelfingen (DE); Kahle, Heiko, 79104 Freiburg (DE)
(74) Vertreter: Manitz, Finsterwald & Partner GbR

(56) Entgegenhaltungen:
- DE-A- 19 631 579
- DE-A- 19 717 299
- DE-U- 20 217 426
- US-A- 5 579 884

## Beschreibung

Die vorliegende Erfindung betrifft eine Vorrichtung, insbesondere eine Biegevorrichtung.

Es sind Biegepressen bekannt, welche eine Lichtschrankenanordnung zum Überwachen eines Schutzbereichs einsetzen. Für manche Verarbeitungsvorgänge ist es notwendig, eine oder mehrere Lichtschranken zu deaktivieren, um bestimmte Eingriffe in den Schutzbereich gezielt zuzulassen. Dies erfolgt gemäß dem Stand der Technik beispielsweise durch einen Nothalt der Vorrichtung, der durch den letztlich zuzulassenden Eingriff ausgelöst wird, und einen nachfolgenden, erneuten Startimpuls der Bedienperson zur Fortsetzung des Verarbeitungsvorgangs, wobei während dieser Fortsetzung des Verarbeitungsvorgangs dann definierte Lichtschranken deaktiviert sind. Dies hat jedoch den Nachteil, dass der Verarbeitungsprozess unterbrochen wird.
Alternativ ist bekannt, einen zusätzlichen Schalter zum Ausschalten der Lichtschranken vorzusehen, welcher vor dem Beginn des Biegevorgangs betätigt wird, was dazu führt, dass bestimmte Lichtschranken für einen einzelnen, nachfolgenden Biegevorgang deaktiviert sind. Eine solche Biegepresse ist beispielsweise aus der DE 197 17 299 A1 bekannt. Diese hat jedoch den Nachteil, dass ein zusätzlicher zu betätigender Schalter an der Biegepresse vorgesehen und von der Bedienperson betätigt werden muss.

Es ist somit eine Aufgabe der vorliegenden Erfindung, eine Vorrichtung bereitzustellen, die auf eine einfache und kostengünstige Weise ein Anpassen eines Schutzbereichs einer Vorrichtung ermöglicht.

Diese Aufgabe wird gemäß der Erfindung durch eine Vorrichtung mit den in Anspruch 1 oder Anspruch 5 angegebenen Merkmalen gelöst.

Gemäß einer ersten Lösungsvariante der Erfindung wird eine Vorrichtung, insbesondere eine Biegevorrichtung, bereitgestellt, umfassend:
- zumindest ein bewegbares Vorrichtungsteil;
- eine Bedieneinrichtung zum Bedienen der Vorrichtung, wobei über die Bedieneinrichtung zumindest ein erstes Signal zum Betätigen der Vorrichtung und ein zweites Signal zum Anhalten der Vorrichtung auslösbar ist;
- eine Schutzeinrichtung zum Überwachen eines Schutzbereichs der Vorrichtung; und
- eine Einrichtung zum selektiven Anpassen des Schutzbereichs vor dem Betätigen der Vorrichtung, wobei
- die Einrichtung zum Anpassen des Schutzbereichs mittels eines dritten Signals der Bedieneinrichtung beaufschlagbar ist.

Somit kann mit Hilfe des dritten Signals der Bedieneinrichtung signalisiert werden, dass der Schutzbereich verändert, vorzugsweise verkleinert, werden soll.

Der Schutzbereich ist vorzugsweise ein Bereich nahe dem bewegbaren Vorrichtungsteil. Mit Hilfe der Schutzeinrichtung kann überwacht werden, ob sich beispielsweise ein Gegenstand oder ein menschliches Körperteil in einer Gefahrenzone der Vorrichtung befindet.

Bevorzugt kann über die Bedieneinrichtung zusätzlich ein viertes Signal ausgegeben werden, mittels welchem ein Nothalt der Vorrichtung auslösbar ist.

Vorzugsweise umfasst die Bedieneinrichtung einen Schalter, insbesondere einen Fußschalter.

Das dritte Signal der Bedieneinrichtung ist vorzugsweise durch mehrfaches Betätigen der Bedieneinrichtung auslösbar. Insbesondere kann vorgesehen sein, dass das dritte Signal durch ein schnell aufeinander folgendes Doppelbetätigen bzw. zweifaches Betätigen der Bedieneinrichtung ausgelöst wird.

Alternativ kann das dritte Signal der Bedieneinrichtung durch eine zusätzliche Schalterstellung auslösbar sein. Hierbei kann die zusätzliche Schalterstellung dadurch realisiert werden, dass der Schalter zeitweise, insbesondere vor dem eigentlichen Bearbeitungsvorgang, in eine Position gebracht wird, welche der Betätigungsposition im Wesentlichen gegenüberliegt bzw. dieser im Wesentlichen entgegengesetzt ist. Bei einem Fußschalter kann diese zusätzliche Schalterstellung demgemäß z.B. durch ein Anheben des Fußschalters erreicht werden.

Gemäß einer zweiten Lösungsvariante der Erfindung wird ferner eine Vorrichtung, insbesondere eine Biegevorrichtung, bereitgestellt, umfassend:
- zumindest ein bewegbares Vorrichtungsteil;
- eine Bedieneinrichtung zum Bedienen der Vorrichtung, wobei über die Bedieneinrichtung zumindest ein erstes Signal zum Betätigen der Vorrichtung und ein zweites Signal zum Anhalten der Vorrichtung auslösbar ist;
- eine Schutzeinrichtung zum Überwachen eines Schutzbereichs der Vorrichtung; und
- eine Einrichtung zum selektiven Anpassen des Schutzbereichs vor dem Betätigen der Vorrichtung, wobei
- die Einrichtung zum Anpassen des Schutzbereichs eine Spracheingabeeinrichtung umfasst.

Ferner ist vorzugsweise eine Sprachverarbeitungseinrichtung vorgesehen zum Verarbeiten der eingegebenen Daten, insbesondere Sprachdaten. Die Lösungsvariante mit Spracheingabeeinrichtung ist im Rahmen der Figurenbeschreibung näher erläutert.

Nachfolgende bevorzugte Ausführungsformen der Erfindung sind bei beiden vorstehend beschriebenen Lösungsvarianten einsetzbar.

Bevorzugt weist die Schutzeinrichtung einer Vorrichtung gemäß der Erfindung eine Standardeinstellung des Schutzbereichs auf, und die Vorrichtung umfasst ferner eine Rücksetzeinrichtung zum automatischen Zurücksetzen des Schutzbereichs in die Standardeinstellung nach jedem abgeschlossenen Bearbeitungsvorgang der Vorrichtung.
Zusätzlich kann vorgesehen sein, dass der Schutzbereich jeweils beim Einschalten bzw. Initialisieren der Vorrichtung in die Standardeinstellung zurückgesetzt wird.

In einer bevorzugten Ausführungsform umfasst die Einrichtung zum Anpassen des Schutzbereichs ferner eine zusätzliche Auswahleinrichtung zum Auswählen des Schutzbereichs. In diesem Fall kann vorzugsweise mittels der Bedieneinrichtung oder der Spracheingabeeinrichtung signalisiert werden, dass ein Schutzbereich abweichend von der Standardeinstellung vorgesehen werden soll, und mittels der Auswahleinrichtung kann ausgewählt werden, wie der Schutzbereich konkret verändert werden soll. Vorzugsweise kann mittels der Auswahleinrichtung ein Schutzbereich aus zumindest zwei verschiedenen, von der Standardeinstellung abweichenden Schutzbereichen ausgewählt werden.

Bevorzugt umfasst die Schutzeinrichtung zumindest eine Lichtschranke. Weiter bevorzugt kann eine Lichtschrankenanordnung mit mehreren Lichtschranken vorgesehen sein.

Alternativ kann die Schutzeinrichtung zur Überwachung eines volumenförmigen Schutzfeldes mit vorgegebener Schutzfeldausdehnung eine Sendeeinrichtung zum Aussenden wenigstens eines Lichtstrahls und eine Empfangseinrichtung zum Detektieren des wenigstens einen Lichtstrahls aufweisen, wobei die Schutzfeldausdehnung variabel einstellbar ist. Dabei ist es bevorzugt, wenn die Sendeeinrichtung aus zumindest einer Lichtquelle, insbesondere einer Laserdiode besteht, deren Sendelicht von einer Sendeoptik aufgeweitet ist und die Empfangseinrichtung aus einer flächigen Anordnung von Einzelempfängern, insbesondere einer CMOS-Matrix, besteht, wobei zumindest bestimmte, bevorzugt alle Einzelempfänger gezielt aktivier- und deaktivierbar sind.

Vorzugsweise umfasst die Schutzeinrichtung ferner eine Einrichtung zum Anhalten der Vorrichtung, wenn eine Anormalität in dem Schutzbereich detektiert wurde. Eine Anormalität kann insbesondere auftreten, wenn sich während des Betriebs beispielsweise ein Gegenstand oder ein menschliches Körperteil in dem momentan gerade aktiven Schutzbereich befindet.

Die Schutzeinrichtung ist bevorzugt an dem bewegbaren Vorrichtungsteil angeordnet und mit diesem bewegbar. Somit kann erreicht werden, dass die Gefahrenzone in der Nähe des bewegbaren Vorrichtungsteils kontinuierlich überwacht wird. Ferner muss dadurch nicht der gesamte Bereich, in welchem sich das bewegbare Vorrichtungsteil bewegen kann, mit einer unnötig umfangreichen bzw. großen Schutzeinrichtung überwacht werden.

Ferner wird gemäß der Erfindung die Verwendung einer Schutzeinrichtung sowie einer Bedieneinrichtung der Erfindung oder einer bevorzugten Ausführungsform davon zur Absicherung einer Vorrichtung, insbesondere einer Biegevorrichtung, vorgeschlagen.

Weitere bevorzugte Ausführungsformen der Erfindung sind in den Unteransprüchen beschrieben.

Weitere Merkmale, Aufgaben und Vorteile der vorliegenden Erfindung werden offensichtlich aus der nachfolgenden Beschreibung bevorzugter Ausführungsformen der Erfindung mit Bezug auf die Zeichnungen; in diesen zeigt
- Fig. 1: eine Vorderansicht einer Vorrichtung gemäß einer bevorzugten Ausführungsform der Erfindung mit einem daran angeordneten Werkstück;
- Fig. 2: eine Seitenansicht der Vorrichtung von Fig. 1,
- Fig. 3: eine Seitenansicht gemäß Fig. 2 mit einem anderen daran angeordneten Werkstück,
- Fig. 4: eine Vorderansicht einer Vorrichtung gemäß einer weiteren bevorzugten Ausführungsform der Erfindung mit einem daran angeordneten Werkstück, und
- Fig. 5: eine schematische Seitenansicht von Teilen der Vorrichtung gemäß Fig. 4 mit reduziertem Schutzbereich.

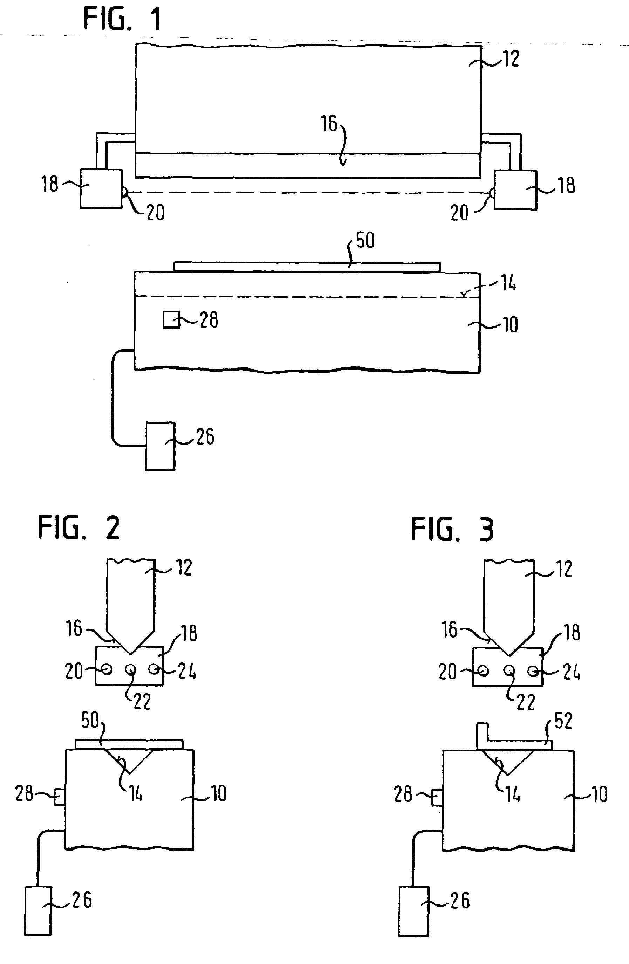

Nachfolgend wird eine Vorrichtung gemäß einer ersten bevorzugten Ausführungsform mit Bezug auf Fig. 1 und 2 im Detail beschrieben. Die dargestellte Vorrichtung ist eine Biegepresse.

Die Vorrichtung umfasst ein feststehendes Unterwerkzeug 10 und ein relativ zu dem Unterwerkzeug 10 bewegbares Oberwerkzeug 12. Alternativ kann vorgesehen sein, dass das Unterwerkzeug 10 bewegbar ist und das Oberwerkzeug 12 feststehend ist oder dass beide Werkzeuge 10, 12 bewegbar sind.

An dem Unterwerkzeug 10 kann ein zu bearbeitendes Werkstück 50 angeordnet werden. In der dargestellten Ausführungsform ist eine Ausnehmung 14 vorgesehen, in welche Bereiche des Werkstücks eintreten können, wenn es bearbeitet bzw. gebogen wird.

Das Oberwerkzeug 12, welches zu dem Unterwerkszeug 10 hin und von diesem weg bewegt werden kann, umfasst einen in der Form zu der Ausnehmung 14 komplementären Abschnitt 16, welcher während des Bearbeitungsvorgangs in die Ausnehmung 14 eintritt und somit das Werkstück 50 verformt.

An dem Oberwerkzeug 12 ist eine Schutzeinrichtung 18 vorgesehen. Die Schutzeinrichtung 18 umfasst in der dargestellten Ausführungsform drei Lichtschranken 20, 22, 24 (siehe auch Fig. 2). Die Lichtschranken 20, 22, 24 sind derart angeordnet, dass sie einen Schutzbereich bilden, welcher den Abschnitt 16 zumindest teilweise umgibt. Dadurch kann beispielsweise ein in der Bewegungsbahn des Oberwerkzeugs 12 vorhandenes menschliches Körperteil, wie ein Finger oder eine Hand, detektiert und der Bearbeitungsvorgang unterbrochen werden, um eine Verletzung der Bedienperson zu vermeiden. Wenn alle Lichtschranken 20, 22, 24 aktiviert sind, wird dies als Standardeinstellung der Lichtschranken bezeichnet. Die Anordnung und Anzahl der Lichtschranken 20, 22, 24 kann je nach Anwendung beliebig variiert werden.

Die Schutzeinrichtung 18 ist ferner derart ausgestaltet, dass die Lichtschranken deaktiviert werden, wenn das Oberwerkzeug 12 sich so nahe an dem zu bearbeitenden Werkstück befindet, dass ein Vorhandensein eines unerwünschten Gegenstands oder eines menschlichen Körperteils im Zwischenraum zwischen Ober- und Unterwerkzeug im wesentlichen ausgeschlossen werden kann.

Die Bedienung der Vorrichtung erfolgt mittels eines Fußpedals 26. Das Fußpedal 26 umfasst zumindest drei Stellungen, in welche es gebracht werden kann. Wenn sich das Fußpedal 26 in der ersten Stellung befindet, entspricht dies einem Ruhezustand der Vorrichtung. Ferner kann der Betrieb der Vorrichtung angehalten werden, wenn das Fußpedal 26 in die erste Stellung gebracht wird. Mit Hilfe der zweiten Stellung des Fußpedals 26 kann eine Arbeitsfunktion bzw. ein Bearbeitungsvorgang der Vorrichtung aktiviert werden. Vorzugsweise muss das Fußpedal 26 während des gesamten Bearbeitungsvorgangs in der zweiten Stellung gehalten werden. Die dritte Stellung ermöglicht einen sog. Notstop bzw. Nothalt. Hierbei wird die Bewegung der Vorrichtung sofort angehalten und die Vorrichtung in der momentanen Schaltstellung blockiert.

Zusätzlich zu den vorstehend beschriebenen drei Stellungen ist in dem Fußpedal 26 gemäß der ersten bevorzugten Ausführungsform der Erfindung eine weitere, in diesem Fall vierte Stellung vorgesehen. Wenn das Fußpedal 26 in diese vierte Stellung gebracht wird, kann eine oder mehrere der Lichtschranken 20, 22, 24 für einen einzelnen Bearbeitungsvorgang in einer vordefinierten Art und Weise abgeschaltet werden. Somit kann ein von der Standardeinstellung abweichender, insbesondere verkleinerter bzw. reduzierter Schutzbereich eingestellt werden. Eine Reduzierung des Schutzbereichs ist insbesondere von Vorteil, wenn ein Werkstück bearbeitet werden soll, von dem Bereiche während des Bearbeitungsvorgangs in den Schutzbereich hineinragen und somit zu einem ungewollten Anhalten der Vorrichtung führen würden. Die vierte Stellung ist vorzugsweise derart ausgestaltet, dass sie durch eine Bewegung des Fußpedals 26 in eine Richtung erreicht wird, welche der Bewegungsrichtung zu der zweiten Stellung im Wesentlichen entgegengesetzt ist bzw. gegenüberliegt.

Ferner ist an der Vorrichtung ein zusätzlicher Schalter 28 als Auswahleinrichtung vorgesehen, mittels welchem unterschiedliche Kombinationen von Lichtschranken 20, 22, 24 eingestellt werden können, die je nach Anwendungsfall zu deaktivieren sind. Je nach dem, was für ein Werkstück bearbeitet werden soll, kann es notwendig sein, eine oder mehrere Lichtschranken 20, 22, 24 abzuschalten, um einen unterbrechungsfreien Betrieb zu ermöglichen. Der Schalter 28 kann vorzugsweise in zumindest zwei Positionen gebracht werden. Dadurch können zumindest zwei von der Standardeinstellung der Lichtschranken abweichende Einstellungen für insbesondere zwei voneinander verschiedene, reduzierte Schutzbereiche vorgesehen werden.

Nachfolgend wird der Betrieb der vorstehend beschriebenen Vorrichtung mit Bezug auf Figuren 1 bis 3 beschrieben.

Zunächst wird mit Bezug auf Figuren 1 und 2 der sog. "Standardbetrieb" der Vorrichtung erläutert. Hierbei wird ein Werkstück 50 bearbeitet, für welches die Standardeinstellung des Schutzbereichs verwendet werden kann.

Die Bedienperson legt das Werkstück 50 auf das Unterwerkzeug 10 und bringt das Fußpedal 26 von der ersten in die zweite Stellung. Dadurch wird der Bearbeitungsvorgang gestartet. Das Oberwerkzeug 12 bewegt sich zu dem Unterwerkzeug 10 hin und kommt in Kontakt mit dem Werkstück 50. Dadurch wird das Werkstück verformt, insbesondere gebogen.

Wenn während des Bearbeitungsvorgangs ein Gegenstand oder ein menschliches Körperteil in unvorhergesehener Weise in die Bewegungsbahn des Oberwerkszeugs 12 und insbesondere in den durch alle drei Lichtschranken 20, 22, 24 aufgebauten Schutzbereich kommt, wird die Bewegung des Oberwerkzeugs 12 sofort angehalten, um z.B. eine Verletzung der Bedienperson zu vermeiden.

Im Folgenden wird der Betrieb der Vorrichtung beschrieben, wenn ein Werkstück 52 bearbeitet werden soll, für welches ein reduzierter Schutzbereich vorgesehen werden muss. Dieser Fall ist in Fig. 3 dargestellt.

Während der Bewegung des Oberwerkzeugs 12 zu dem Unterwerkzeug 10 hin kommt der in Fig. 3 hochragende Bereich des Werkstücks 52 in den durch die Lichtschranke 20 abgedeckten Raum und würde somit zu einer ungewollten Unterbrechung des Bearbeitungsvorgangs führen. Somit ist es in diesem Fall notwendig, den Schutzbereich zu reduzieren. Hierzu wählt die Bedienperson mittels des Schalters 28 zunächst aus, wie der Schutzbereich reduziert werden soll, d.h. welche der Lichtschranken 20, 22, 24 abgeschaltet werden soll. Im vorliegenden Fall wird die Lichtschranke 20 abgeschaltet.

Um zu bestätigen, dass der Schutzbereich bei einem konkret auszuführenden Bearbeitungsvorgang tatsächlich in der voreingestellten Weise reduziert werden soll, bringt die Bedienperson vor Beginn des eigentlichen Bearbeitungsvorgangs das Fußpedal 26 in die vierte Stellung. Dadurch wird der Schutzeinrichtung signalisiert, dass im vorliegenden Fall die Lichtschranke 20 für den nachfolgenden Bearbeitungsvorgang ausgeschaltet werden soll. Nachfolgend wird der Bearbeitungsvorgang wie mit Bezug auf Figuren 1 und 2 beschrieben ohne unnötige Unterbrechung durchgeführt. Somit erfolgt mit Hilfe der Fußpedals 26 die Signalisierung, dass der Schutzbereich verkleinert werden soll.

Nachdem der Bearbeitungsvorgang beendet wurde, wird der Schutzbereich wieder auf die Standardeinstellung zurückgesetzt. Somit wird verhindert, dass bei einem nachfolgenden Bearbeitungsvorgang versehentlich ein reduzierter Schutzbereich verwendet wird. Für einen nachfolgenden Bearbeitungsvorgang müsste der reduzierte Schutzbereich wieder von neuem entsprechend durch selektives Betätigen des Fußpedals 26 in seine vierte Stellung und gegebenenfalls Betätigen des Schalters 28 ausgewählt werden.

Alternativ zu dem Vorsehen der vierten Stellung des Fußpedals 26 kann die Signalisierung bzw. Bestätigung des veränderten Schutzbereichs durchgeführt werden, indem das Fußpedal 26 vor dem eigentlichen Bearbeitungsvorgang zweimal hintereinander in die zweite Stellung gebracht wird. Der Bearbeitungsvorgang wird danach wie oben beschrieben durchgeführt.

In einer weiteren bevorzugten Ausführungsform kann auf den Schalter 28 verzichtet werden. Dies wird im Folgenden beschrieben.

Für den Fall dass es nur ein, vorzugsweise fest eingestellter, eingeschränkter Schutzbereich vorgesehen ist, kann mit Hilfe des Fußpedals 26, wie vorstehend beschrieben, signalisiert werden, dass der Schutzbereich eingeschränkt werden soll.

Sind hingegen mehrere verschiedene reduzierte Schutzbereiche vorgesehen, können zusätzliche Fußpedalstellungen vorgesehen werden, mittels welcher der jeweils zu verwendende Schutzbereich ausgewählt werden kann. Alternativ kann die Signalisierung durch unterschiedliches, mehrfaches Betätigen des Fußpedals 26 erfolgen.

In einer weiteren bevorzugten (nicht dargestellten) Ausführungsform erfolgt die Signalisierung des veränderten Schutzbereichs mittels einer Spracheingabeeinrichtung.

Hierbei kann auf die zusätzliche Fußpedalstellung verzichtet werden. Die Bedienperson gibt mittels Spracheingabe an, dass der Schutzbereich reduziert werden soll. Diese Eingabe wird mit Hilfe einer Spracherkennungseinrichtung verarbeitet.

Für die Spracheingabe werden vorzugsweise Kommandowörter und/oder Kommandosätze verwendet. Bevorzugt erfolgt die Spracheingabe über ein Kopfbügelmikrofon (Headset), um eine bessere Erkennungsleistung zu gewährleisten.

In dieser Ausführungsform kann ein Schalter zum Auswählen des reduzierten Schutzbereichs entsprechend der mit Bezug auf Figuren 1 bis 3 beschriebenen Ausführungsform vorgesehen sein. In diesem Fall wird durch die Spracheingabe bestätigt bzw. signalisiert, dass der Schutzbereich, wie durch den Schalter ausgewählt, reduziert werden soll.

Alternativ kann auf den Schalter verzichtet werden. In diesem Fall wird die Angabe, wie der Schutzbereich reduziert werden soll, ebenfalls durch die Spracheingabe signalisiert. Zudem kann auf den Fußschalter ganz verzichtet werden, wenn auch die Aktivierung des Bearbeitungsvorgangs mittels Spracheingabe realisiert wird.

Ferner ist es denkbar, dass die Aktivierung des reduzierten Schutzbereichs mittels des Fußpedals 26 erfolgt und die Angabe, wie der veränderte Schutzbereich ausgestaltet sein soll mittels Spracheingabe realisiert wird.

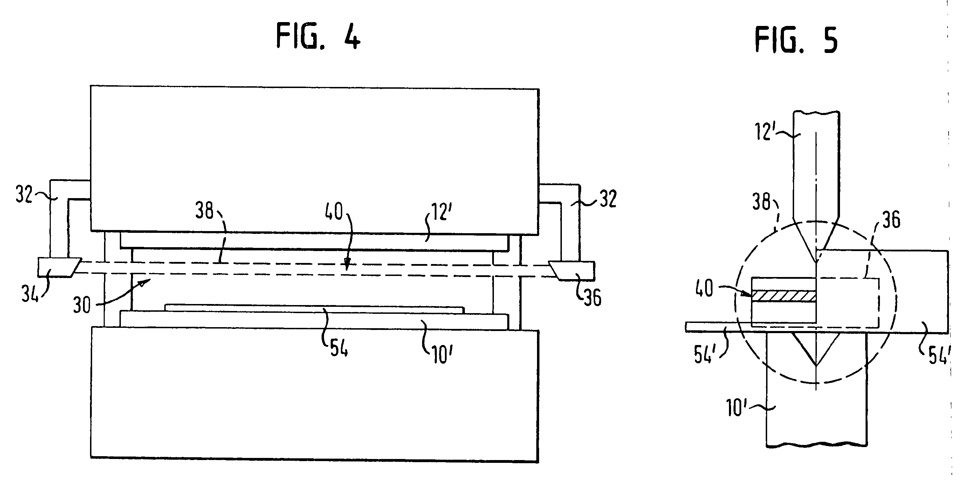

Die nachfolgende Beschreibung der Figuren 4 und 5 bezieht sich auf eine alternative Ausbildung der Schutzeinrichtung, wobei die Einrichtung zum Anpassen des Schutzbereichs bei dieser Ausführungsform ebenso ausgebildet werden kann, wie vorstehend in Verbindung mit den Figuren 1 bis 3 beschrieben.

Die in Fig. 4 gezeigte Vorrichtung, welche als Gesenkbiegepresse ausgebildet ist, besitzt ein Oberwerkzeug 12', das zu einer Arbeitsbewegung vertikal nach unten gegen ein Unterwerkzeug 10' angetrieben werden kann, um ein auf dem Unterwerkzeug 10' aufliegendes Werkstück 54 zu biegen. Während dieser Arbeitsbewegung wird ein Öffnungsspalt 30 zwischen dem Oberwerkzeug 12' und dem Werkstück 54 allmählich geschlossen.

An den beiden Seiten des Oberwerkzeugs 12' ist jeweils ein Haltearm 32 vorgesehen. Die Haltearme 32 tragen eine Sendeeinrichtung 34 und eine ortsauflösende Empfangseinrichtung 36, die Teile eines optoelektronischen Sensors sind. Die Sendeeinrichtung 34 besitzt eine Laserdiode mit einer Sendeoptik (in den Figuren nicht gezeigt), die das Sendelicht der Laserdiode zu einem Lichtstrahl 38 aufweitet. Die Empfangseinrichtung 36 besitzt einen rechteckigen CMOS-Matrix-Empfänger, der von dem Lichtstrahl 38 beaufschlagt wird.

Der Lichtstrahl 38 durchquert den Öffnungsspalt 30 unterhalb des Oberwerkzeugs 12'. Der Umriss des aktivierten Teils der Empfangseinrichtung 36 definiert innerhalb des Lichtstrahls 38 somit ein volumenförmiges Schutzfeld 40 zwischen dem Oberwerkzeug 12' und dem Unterwerkzeug 10', wie nachfolgend noch erläutert wird. Sobald eine Auswerte- und Steuereinrichtung des Sensors (in den Figuren nicht gezeigt) eine Unterbrechung des Lichtstrahls 38 innerhalb des Schutzfelds 40 detektiert, löst sie einen Abschaltvorgang zum Anhalten des Oberwerkzeugs 12' aus. Dadurch wird eine Bedienperson, die beispielsweise das Werkstück 54 in den Öffnungsspalt 30 einführt, vor Verletzungen durch das Oberwerkzeug 12' geschützt.

Fig. 5 zeigt die Lage des Oberwerkzeugs 11, des Lichtstrahls 38, der Empfangeinrichtung 36 und des Schutzfelds 40. Als Werkstück 54' ist hier ein zu bearbeitender Kasten auf dem Unterwerkzeug 10' abgelegt. Der Kasten 54' würde in ein Schutzfeld eingreifen, das bei Aktivierung aller Empfangselemente der Empfangseinrichtung 36 vorhanden wäre. Dementsprechend wird gemäß Fig. 5 nur mit einem reduzieren Schutzfeld 40 gearbeitet, in welches beim Biegevorgang keinerlei Teile des Kastens 54' eingreifen, so dass keine Unterbrechung des Biegevorgangs erfolgt.

Das Umschalten zwischen einem maximal möglichen Schutzfeld, bei dem alle Empfangselemente der Empfangseinrichtung 36 aktiviert sind und einem reduzierten Schutzfeld 40 gemäß Fig. 5 kann nach einem beliebigen der vorstehend erläuterten erfindungsgemäßen Prinzipien erfolgen.

### Bezugszeichenliste

- 10: Unterwerkzeug
- 10': Unterwerkzeug
- 12: Oberwerkzeug
- 12': Oberwerkzeug
- 14: Ausnehmung
- 16: Abschnitt
- 18: Schutzeinrichtung
- 20: Lichtschranke
- 22: Lichtschranke
- 24: Lichtschranke
- 26: Fußpedal
- 28: Schalter
- 30: Öffnungsspalt
- 32: Haltearm
- 34: Sendeeinrichtung
- 36: Empfangseinrichtung
- 38: Lichtstrahl
- 40: Schutzfeld

- 50: Werkstück
- 52: Werkstück
- 54: Werkstück
- 54': Werkstück

## Patentansprüche

1. Vorrichtung, insbesondere Biegevorrichtung, umfassend:
- zumindest ein bewegbares Vorrichtungsteil (12);
- eine Bedieneinrichtung (26) zum Bedienen der Vorrichtung, wobei über die Bedieneinrichtung (26) zumindest ein erstes Signal zum Betätigen der Vorrichtung und ein zweites Signal zum Anhalten der Vorrichtung auslösbar ist;
- eine Schutzeinrichtung (18) zum Überwachen eines Schutzbereichs der Vorrichtung; und
- eine Einrichtung zum selektiven Anpassen des Schutzbereichs vor dem Betätigen der Vorrichtung;
**dadurch gekennzeichnet, dass**
die Einrichtung zum Anpassen des Schutzbereichs mittels eines dritten Signals der Bedieneinrichtung (26) beaufschlagbar ist.

2. Vorrichtung gemäß Anspruch 1,
**dadurch gekennzeichnet, dass**
die Bedieneinrichtung einen Schalter (26), insbesondere einen Fußschalter (26), umfasst.

3. Vorrichtung gemäß einem der vorhergehenden Ansprüche,
**dadurch gekennzeichnet, dass**
das dritte Signal der Bedieneinrichtung (26) durch mehrfaches Betätigen der Bedieneinrichtung (26) auslösbar ist.

4. Vorrichtung gemäß Anspruch 2,
**dadurch gekennzeichnet, dass**
das dritte Signal der Bedieneinrichtung (26) durch eine zusätzliche Schalterstellung auslösbar ist.

5. Vorrichtung, insbesondere Biegevorrichtung, umfassend:
- zumindest ein bewegbares Vorrichtungsteil (12);
- eine Bedieneinrichtung (26) zum Bedienen der Vorrichtung, wobei über die Bedieneinrichtung (26) zumindest ein erstes Signal zum Betätigen der Vorrichtung und ein zweites Signal zum Anhalten der Vorrichtung auslösbar ist;
- eine Schutzeinrichtung (18) zum Überwachen eines Schutzbereichs der Vorrichtung; und
- eine Einrichtung zum selektiven Anpassen des Schutzbereichs vor dem Betätigen der Vorrichtung;
**dadurch gekennzeichnet, dass**
die Einrichtung zum Anpassen des Schutzbereichs eine Spracheingabeeinrichtung umfasst.

6. Vorrichtung gemäß einem der vorhergehenden Ansprüche,
**dadurch gekennzeichnet, dass**
die Schutzeinrichtung (18) eine Standardeinstellung des Schutzbereichs aufweist und die Vorrichtung ferner eine Rücksetzeinrichtung zum automatischen Zurücksetzen des Schutzbereichs in die Standardeinstellung nach jedem Betätigen der Vorrichtung umfasst.

7. Vorrichtung gemäß einem der vorhergehenden Ansprüche,
**dadurch gekennzeichnet, dass**
die Einrichtung zum Anpassen des Schutzbereichs ferner eine zusätzliche Auswahleinrichtung (28) zum Auswählen des Schutzbereichs umfasst.

8. Vorrichtung gemäß einem der vorhergehenden Ansprüche,
**dadurch gekennzeichnet, dass**
die Schutzeinrichtung (18) zumindest eine Lichtschranke (20, 22, 24) umfasst.

9. Vorrichtung gemäß einem der Ansprüche 1 bis 7,
**dadurch gekennzeichnet, dass**
die Schutzeinrichtung zur Überwachung eines volumenförmigen Schutzfeldes mit vorgegebener Schutzfeldausdehnung eine Sendeeinrichtung (34) zum Aussenden wenigstens eines Lichtstrahls (38) und eine Empfangseinrichtung (36) zum Detektieren des wenigstens einen Lichtstrahls (38) aufweist, wobei die Schutzfeldausdehnung variabel einstellbar ist.

10. Vorrichtung gemäß Anspruch 9,
**dadurch gekennzeichnet, dass**
die Sendeeinrichtung (34) aus einer zumindest einer Lichtquelle, insbesondere einer Laserdiode besteht, deren Sendelicht von einer Sendeoptik aufgeweitet ist und dass die Empfangseinrichtung (36) aus einer flächigen Anordnung von Einzelempfängern, insbesondere einer CMOS-Matrix, besteht, wobei zumindest bestimmte, bevorzugt alle Einzelempfänger gezielt aktivier- und deaktivierbar sind.

11. Vorrichtung gemäß einem der vorhergehenden Ansprüche,
**dadurch gekennzeichnet, dass**
die Schutzeinrichtung (18) ferner eine Einrichtung zum Anhalten der Vorrichtung umfasst, wenn eine Anormalität in dem Schutzbereich detektiert wurde.

12. Vorrichtung gemäß einem der vorhergehenden Ansprüche,
**dadurch gekennzeichnet, dass**
die Schutzeinrichtung (18) an dem bewegbaren Vorrichtungsteil (12) angeordnet ist.

13. Verwendung einer Schutzeinrichtung (18) sowie einer Bedieneinrichtung (26) nach einem der vorhergehenden Ansprüche zur Absicherung einer Vorrichtung, insbesondere einer Biegevorrichtung.

## Claims

1. An apparatus, in particular a bending apparatus, comprising:
- at least one movable apparatus part (12);
- an operating device (26) for the operation of the apparatus, with at least one first signal for the actuation of the apparatus and one second signal for the stopping of the apparatus being able to be triggered via the operating device (26);
- a protection device (18) for the monitoring of a protected zone of the apparatus; and
- a device for the selective adaptation of the protected zone before the actuation of the apparatus,
**characterized in that**
the device for the adaptation of the protected zone can be acted on by means of a third signal of the operating device (26).

2. An apparatus in accordance with claim 1, **characterized in that** the operating device comprises a switch (26), in particular a foot switch (26).

3. An apparatus in accordance with any one of the preceding claims, **characterized in that** the third signal of the operating device (26) can be triggered by a multiple actuation of the operating device (26).

4. An apparatus in accordance with claim 2, **characterized in that** the third signal of the operating device (26) can be triggered by an additional switch position.

5. An apparatus, in particular a bending apparatus, comprising:
- at least one movable apparatus part (12);
- an operating device (26) for the operation of the apparatus, with at least one first signal for the actuation of the apparatus and one second signal for the stopping of the apparatus being able to be triggered via the operating device (26);
- a protection device (18) for the monitoring of a protected zone of the apparatus; and
- a device for the selective adaptation of the protected zone before the actuation of the apparatus;
**characterized in that** the device for the adaptation of the protected zone includes a voice input device.

6. An apparatus in accordance with any one of the preceding claims, **characterized in that** the protection device (18) has a standard setting for the protected zone and the apparatus furthermore comprises a reset device for the automatic resetting of the protected zone to the standard setting after every actuation of the apparatus.

7. An apparatus in accordance with any one of the preceding claims, **characterized in that** the device for the adaptation of the protected zone furthermore comprises an additional selection device (28) for the selection of the protected zone.

8. An apparatus in accordance with any one of the preceding claims, **characterized in that** the protection device (18) comprises at least one light barrier (20, 22, 24).

9. An apparatus in accordance with one of the claims 1 to 7, **characterized in that** the protection device for the monitoring of a volumetric protective field with a pre-determined extent of the protective field has a transmitter device (34) for the transmission of at least one light beam (38) and a receiver device (36) for the detection of the at least one light beam (38), with the extent of the protective field being variably adjustable.

10. An apparatus in accordance with claim 9, **characterized in that** the transmitter device (34) consists of at least one light source, in particular of a laser diode, whose transmitted light is expanded by an optical transmitter device; and **in that** the receiver device (36) consists of an areal arrangement of individual receivers, in particular of a CMOS matrix, with at least specific, preferably all, individual receivers being directly actuable and de-actuable.

11. An apparatus in accordance with any one of the preceding claims, **characterized in that** the protection device (18) furthermore comprises a device for the stopping of the apparatus when an abnormality has been detected in the protected zone.

12. An apparatus in accordance with any one of the preceding claims, **characterized in that** the protection device (18) is arranged at the movable apparatus part (12).

13. Use of a protection device (18) and of an operating device (26) in accordance with any one of the preceding claims for the securing of an apparatus, in particular of a bending apparatus.

## Revendications

1. Appareil, en particulier appareil de pliage comprenant :
- au moins une partie d'appareil mobile (12) ;
- un dispositif de manoeuvre (26) pour manoeuvrer l'appareil, le dispositif de manoeuvre (26) pouvant permettre de déclencher au moins un premier signal pour actionner l'appareil et un deuxième signal pour arrêter l'appareil ;
- un dispositif de protection (18) pour surveiller une zone de protection de l'appareil ; et
- un dispositif d'adaptation sélective d'une zone de protection avant l'actionnement de l'appareil ;
**caractérisé en ce que** le dispositif pour adapter la zone de protection peut être sollicité par un troisième signal du dispositif de manoeuvre (26).

2. Appareil selon la revendication 1, **caractérisé en ce que** le dispositif de manoeuvre (26) comprend un interrupteur (26), en particulier un interrupteur à pédale (26).

3. Appareil selon l'une des revendications précédentes, **caractérisé en ce que** le troisième signal du dispositif de manoeuvre (26) peut être déclenché par actionnement multiple du dispositif de manoeuvre (26).

4. Appareil selon la revendication 2, **caractérisé en ce que** le troisième signal du dispositif de manoeuvre (26) peut être déclenché par une position d'interrupteur additionnelle.

5. Appareil, en particulier appareil de pliage comprenant :
- au moins une partie d'appareil mobile (12) ;
- un dispositif de manoeuvre (26) pour manoeuvrer l'appareil, le dispositif de manoeuvre (26) pouvant permettre de déclencher au moins un premier signal pour actionner l'appareil et un deuxième signal pour arrêter l'appareil ;
- un dispositif de protection (18) pour surveiller une zone de protection de l'appareil ; et
- un dispositif d'adaptation sélective d'une zone de protection avant l'actionnement de l'appareil ;
**caractérisé en ce que** le dispositif pour adapter la zone de protection comprend un dispositif d'entrée vocale.

6. Appareil selon l'une des revendications précédentes, **caractérisé en ce que** le dispositif de protection (18) présente un réglage standard de la zone de protection et l'appareil comprend en outre un dispositif de réinitialisation pour réinitialiser automatiquement la zone de protection dans le réglage standard après chaque actionnement de l'appareil.

7. Appareil selon l'une des revendications précédentes, **caractérisé en ce que** le dispositif pour adapter la zone de protection comprend en outre un dispositif de sélection (28) additionnel pour sélectionner la zone de protection.

8. Appareil selon l'une des revendications précédentes, **caractérisé en ce que** le dispositif de protection (18) comprend au moins une barrière lumineuse (20, 22, 24).

9. Appareil selon l'une des revendications 1 à 7, **caractérisé en ce que** le dispositif de protection présente, pour surveiller un champ de protection en forme de volume avec extension de champ prédéterminée, un dispositif émetteur (34) pour émettre au moins un rayon lumineux (38) et un dispositif récepteur (36) pour détecter ledit au moins un rayon lumineux (38), l'extension de champ de protection étant réglable de façon variable.

10. Appareil selon la revendication 9, **caractérisé en ce que** le dispositif émetteur (34) est constitué par au moins une source lumineuse, en particulier par une diode laser, dont la lumière émettrice est élargie par un système optique émetteur et **en ce que** le dispositif récepteur (36) est constitué par un agencement surfacique de récepteurs individuels, en particulier par une matrice CMOS, dans lequel au moins certains récepteurs individuels, de préférence tous les récepteurs individuels, sont activables et désactivables de manière ciblée.

11. Appareil selon l'une des revendications précédentes, **caractérisé en ce que** le dispositif de protection (18) comprend en outre un dispositif pour arrêter l'appareil lorsqu'une anomalie a été détectée dans la zone de protection.

12. Appareil selon l'une des revendications précédentes, **caractérisé en ce que** le dispositif de protection (18) est agencé sur la partie d'appareil mobile (12).

13. Utilisation d'un dispositif de protection (18) ainsi qu'un dispositif de manoeuvre (26) selon l'une des revendications précédentes, pour protéger un appareil, en particulier un appareil de pliage.
